# EUROPEAN PATENT APPLICATION

(11) **EP 4 778 380 A1**
(43) Date of publication of application: **22.07.2026**
(21) Application number: 25221103.2
(22) Date of filing: 05.12.2025
(51) Int. Cl.: A01D 34/74

(54) **CUTTING ASSEMBLY, PAIR OF CUTTING ASSEMBLIES, AND LAWNMOWER COMPRISING ONE OR MORE CUTTING ASSEMBLIES**

(30) Priority: 21.01.2025 SE 2550044
(71) Applicant: Husqvarna AB, 561 82 Huskvarna (SE)
(72) Inventor: JOHANSSON, Jan-Åke, 561 82 Huskvarna (SE); PERSSON, Henrik, 561 82 Huskvarna (SE)

(57) **Abstract**

A cutting assembly (1, 1', 1", 2, 10) is disclosed configured to be mounted to a lawnmower (3) to cut vegetation. The cutting assembly (1, 1', 1", 2, 10) comprises a mounting unit (4) configured to be mounted to a lawnmower body (3') of the lawnmower (3) and a cutting arrangement (5) comprising a cutting unit (6) and three or more ground engaging members (7, 7', 7", 7"') each configured to abut against a ground surface (Gs) in a ground engaging plane (Gp) to maintain a distance (d1) between the cutting unit (6) and the ground surface (Gs) during operation of the cutting assembly (1, 1', 1", 2, 10). The cutting assembly (1, 1', 1", 2, 10) further comprises a connection arrangement (8) comprising a pivot mechanism (9) pivotally attaching the cutting arrangement (5) to the mounting unit (4) around multiple axes (ax1, ax2) each being transversal to a normal (N) of the ground engaging plane (Gp). The present disclosure further relates to a pair of cutting assemblies (10, 10') and a lawnmower (3) comprising one or more cutting assemblies (1, 1', 1", 2, 10, 10').

## Description

### TECHNICAL FIELD

The present disclosure relates to a cutting assembly configured to be mounted to a lawnmower to cut vegetation. The present disclosure further relates to a pair of cutting assemblies as well as a lawnmower comprising one or more cutting assemblies.

### BACKGROUND

A lawnmower is an apparatus capable of cutting grass on a lawn. Various types of lawnmowers exist on today's market, including walk-behind mowers, riding mowers, and self-propelled robotic lawnmowers.

A walk-behind mower typically comprises an elongated handle that allows a user to push or guide the mower. Some walk-behind mowers include a propulsion arrangement configured to drive one or more wheels, while others, often referred to as "push mowers," lack such an arrangement.

A riding mower is a mower that comprises a seat for a user, a steering device, such as a steering wheel, and a motor configured to provide motive power to the mower. Riding mowers are usually used for larger areas such as lawns, gardens, parks, sports fields, and golf courses.

A self-propelled robotic lawnmower is a mower capable of autonomously cutting grass within a defined area. Some robotic lawnmowers require a user to set up a border wire around the lawn to define the mowing area. These robotic lawnmowers use sensors to locate the wire and, thereby, the boundary of the area to be trimmed. In addition to the wire, robotic lawnmowers may comprise other positioning units and sensors, such as sensors for detecting events like a collision with an object in the area. The robotic lawnmower may move in a systematic and/or random pattern to ensure complete coverage of the area.

A robotic lawnmower typically comprises one or more batteries powering electrically driven cutting units. Some models use the border wire to locate a recharging dock, where the batteries are recharged. Generally, robotic lawnmowers operate unattended within their defined areas, which can include lawns, gardens, parks, sports fields, golf courses, or similar areas.

Lawnmowers of various types are associated with some mutual problems. One such problem is the cutting result, which can be defined as the uniformity of the grass length on a mowed lawn. Achieving a uniform grass length can be difficult due to the long tolerance chain between the support wheels and the cutting unit of the lawnmower. Furthermore, uneven ground contours, such as undulations, bumps, and pits, exacerbate the problem of providing precise cutting with a high uniformity of grass length.

Another problem is scalping, which occurs when the cutting unit hits the ground surface. Scalping can damage the lawn, requiring regrowth in the affected area, and it often leaves unesthetic marks. Moreover, scalping can damage or wear the cutting unit and pose safety risks, as soil, stones, sticks, or other debris may be thrown away from the cutting unit at high velocities.

These problems are particularly pronounced when cutting grass to a low height, such as on golf courses or similar areas.

### SUMMARY

It is an object of the present invention to overcome, or at least alleviate, at least some of the above-mentioned problems and drawbacks. The object is achieved by the subject-matter of the appended independent claim(s).

According to a first aspect of the present disclosure, the object is achieved by a cutting assembly configured to be mounted to a lawnmower to cut vegetation, the cutting assembly comprising a mounting unit configured to be mounted to a lawnmower body of the lawnmower and a cutting arrangement. The cutting arrangement comprises a cutting unit and three or more ground engaging members each configured to abut against a ground surface in a ground engaging plane to maintain a distance between the cutting unit and the ground surface during operation of the cutting assembly. The cutting arrangement further comprises a connection arrangement, wherein the connection arrangement comprises a pivot mechanism pivotally attaching the cutting arrangement to the mounting unit around multiple axes each being transversal to a normal of the ground engaging plane.

Thereby, a cutting assembly is provided having conditions for cutting with high precision to obtain a high uniformity of a length of the grass being cut, also in cases where undulated ground surfaces are being cut.

This is because forces derived from a ground engaging contact between the number of ground engaging members and a ground surface can move the cutting arrangement, and thereby also the cutting unit, relative to the lawnmower body to freely follow the contour of the ground surface during operation of the cutting assembly.

Furthermore, since the cutting arrangement comprises the cutting unit and the number of ground engaging members, a significantly lower tolerance chain can be obtained between the number of ground engaging members and the cutting unit as compared to a tolerance chain between lawnmower support wheels and a cutting unit of a traditional lawnmower.

In addition, due to the three or more ground engaging members and the pivot mechanism of the connection arrangement, a cutting assembly is provided having a significantly reduced risk of scalping during operation, also in cases where undulated ground surfaces are being cut.

Thus, in summary, a cutting assembly is provided having conditions for cutting grass to a low cutting height, while obtaining a high uniformity of a length of the grass being cut and a low risk of scalping.

Accordingly, a cutting assembly is provided overcoming, or at least alleviating, at least some of the above-mentioned problems and drawbacks. As a result, the above-mentioned object is achieved.

Optionally, the each of the multiple axes is parallel to the ground engaging plane. Thereby, it is ensured that the cutting arrangement can smoothly and effectively follow the contour of the ground surface during operation of the cutting assembly.

Optionally, the cutting unit is configured to rotate in a rotation plane during operation of the cutting assembly, and wherein the angle between the rotation plane and the ground engaging plane is less than 10 degrees. Thereby, it is ensured that a uniform and precise cutting result can be achieved during operation of the cutting assembly.

Optionally, the cutting arrangement comprises a motor configured to rotate the cutting unit during operation of the cutting assembly. Thereby, it can be ensured that the motor follows the pivoting movement around the multiple axes of the pivot mechanism, which in turn circumvents the need for a transmission arrangement between the motor and the cutting unit to handle angular displacement between the motor's output shaft and the cutting unit. Instead, due to these features, the output shaft of the motor can be directly connected to the cutting unit, which can ensure low cost and reduced manufacturing complexity of the cutting assembly.

Optionally, the motor is an electric motor. Thereby, the cutting assembly can benefit from reduced emissions, lower noise levels, and improved energy efficiency during operation. Additionally, the simplicity of the electric motor design can further contribute to the low manufacturing complexity and cost-efficiency of the cutting assembly.

Optionally, the connection arrangement comprises a guide mechanism enabling movement of the cutting arrangement in directions towards and away from the mounting unit. Thereby, it is further ensured that the cutting arrangement can freely follow the contour of the ground surface during operation of the cutting assembly. In other words, a high uniformity of a length of the grass being cut can be further ensured while also lowering the risk of scalping.

Optionally, the connection arrangement comprises an elastic element arranged to bias the cutting arrangement in a direction away from the mounting unit. Since the elastic element is arranged to bias the cutting arrangement in a direction away from the mounting unit, the elastic element will bias the cutting arrangement towards a ground surface when the cutting assembly is mounted to a lawnmower, and the lawnmower is positioned in an upright use position on the ground surface. In this manner, it can be further ensured that the cutting arrangement efficiently follows the contour of the ground surface without skipping over bumps or irregularities during operation of the cutting assembly. Thus, in this manner, a high uniformity of a length of the grass being cut can be further ensured.

Optionally, the elastic element is a coil spring. Thereby, a simple and efficient elastic element is provided for biasing the cutting arrangement in the direction away from the mounting unit.

Optionally, the guide mechanism is a linear guide mechanism enabling linear movement of the cutting arrangement in directions towards and away from the mounting unit. Thereby, smooth movement of the cutting arrangement along a predetermined path relative to the mounting unit is provided.

Optionally, the cutting unit is configured to rotate around a rotation axis during operation of the cutting assembly, and wherein the cutting arrangement comprises three ground engaging members arranged such that ground engaging portions thereof forms edges of a triangle inscribing the rotation axis. Thereby, it can be further ensured that the movement of the three ground engaging members causes the cutting unit of the cutting arrangement to efficiently follow the contour of the ground surface. In other words, due to these features, a high uniformity of a length of the grass being cut can be further ensured while also lowering the risk of scalping.

Optionally, the cutting assembly is configured to be moved along a forward moving direction of the cutting assembly over a ground surface during operation, and wherein the triangle comprises a first side being perpendicular to the forward moving direction of the cutting assembly. Thereby, it can be ensured that the ground-engaging members are positioned such that they do not press down or flatten the grass before the grass reaches the cutting unit, which can further enhance the cutting result.

Optionally, the cutting unit is configured to rotate during operation of the cutting assembly such that radially outer portions of the cutting unit follow a circular path, and wherein the cutting arrangement comprises three ground-engaging members, including two front members and one rear member, and wherein the distance between the two front members is greater than the diameter of the circular path. Thereby, it can be further ensured that the ground-engaging members are positioned such that they do not press down or flatten the grass before the grass reaches the cutting unit, which can further enhance the cutting result.

Optionally, the cutting assembly is configured to be moved along a forward moving direction of the cutting assembly over a ground surface during operation, and wherein the two front members are positioned outside the circular path when the cutting assembly is viewed in a direction opposite to the forward moving direction. Thereby, it is ensured that the ground-engaging members are positioned such that they do not press down or flatten the grass before the grass reaches the cutting unit when the cutting assembly is moved along the forward moving direction over the ground surface, which can further enhance the cutting result.

Optionally, the cutting unit comprises a cutting disc and a number of cutting members pivotally arranged at a periphery of the cutting disc. Thereby, a cutting assembly is provided having conditions for cutting grass in an energy efficient manner. Moreover, a safer and more reliable cutting assembly can be provided because a cutting member of the number of cutting members may pivot upon impact with an object, such as a stone, stick, or a limb of a human or animal.

Optionally, the cutting arrangement comprises a first structural member to which the three or more ground-engaging members are attached and a second structural member attached to the connection arrangement, and wherein the cutting arrangement comprises a set of spacers positioned between the first structural member and the second structural member such that a change in the thickness of the spacers changes the distance between the cutting unit and the ground surface. Thereby, a cutting assembly is provided that allows a user to alter or adjust the cutting height of the cutting assembly simply by replacing the set of spacers with another set of a different thickness. In addition, the tolerance chain between the ground-engaging portions of the three or more ground-engaging members and the cutting unit can be compensated for by the set of spacers.

Optionally, each ground engaging member is connected to a structural member of the cutting arrangement via an adjustment mechanism controllable to adjust a relative distance between a ground engaging portion of the ground engaging member and the structural member. Thereby, a cutting assembly is provided that allows the cutting height to be finely tuned by adjusting the position of the ground-engaging portions relative to the structural member, ensuring a uniform cutting result. In addition, since each ground-engaging member is connected to a structural member of the cutting arrangement via an adjustment mechanism, the angle of the cutting unit relative to the ground surface can also be adjusted via the adjustment mechanisms. Furthermore, the tolerance chain between the ground-engaging portions and the cutting unit can be compensated for by the adjustment mechanisms, further enhancing the precision and effectiveness of the cutting assembly.

Optionally, the pivot mechanism comprises a universal joint. Thereby, it is ensured that the cutting arrangement can freely follow the contour of the ground surface during operation of the cutting assembly while preventing movement or rotation of the cutting arrangement in unintended directions. Furthermore, due to the structural simplicity of a universal joint, a high uniformity of a length of the grass being cut, and a low risk of scalping, can be provided while ensuring low manufacturing costs of the cutting assembly.

Optionally, the pivot mechanism comprises a ball joint. Thereby, it is ensured that the cutting arrangement can freely follow the contour of the ground surface during operation of the cutting assembly while preventing movement or rotation of the cutting arrangement in unintended directions. Furthermore, due to the structural simplicity of a ball joint, a high uniformity of a length of the grass being cut, and a low risk of scalping, can be provided while ensuring low manufacturing costs of the cutting assembly.

Optionally, the cutting assembly comprises one ground engaging member shared with an adjacent cutting assembly. Thereby, the total number of ground engaging members can be reduced, while ensuring a high uniformity of a length of the grass being cut, and a low risk of scalping. Moreover, it can be further ensured that the ground-engaging members are positioned such that they do not press down or flatten the grass before the grass reaches a cutting unit, which can further enhance the cutting result.

Optionally, the shared ground engaging member is attached to a structural member hingedly connected to the cutting arrangement of the cutting assembly via a first hinge. Thereby, it can be ensured that the cutting arrangement can follow the contour of a ground surface in a smooth and efficient manner while reducing the total number of ground engaging members of a lawnmower.

According to a second aspect of the present disclosure, the object is achieved by a pair of cutting assemblies comprising a cutting assembly according to the first aspect of the present disclosure, wherein the cutting assembly comprises one ground engaging member shared with an adjacent cutting assembly, and wherein the pair of cutting assemblies comprises the adjacent cutting assembly.

Thereby, a pair of cutting assemblies is provided having conditions for cutting grass to a low cutting height, while obtaining a high uniformity of a length of the grass being cut and a low risk of scalping.

Accordingly, a pair of cutting assemblies is provided overcoming, or at least alleviating, at least some of the above-mentioned problems and drawbacks. As a result, the above-mentioned object is achieved.

Optionally, the shared ground engaging member is attached to a structural member hingedly connected to the cutting arrangement of the adjacent cutting assembly via a second hinge. Thereby, it can be ensured that each cutting arrangement can follow the contour of a ground surface in a smooth and efficient manner while reducing the total number of ground engaging members of a lawnmower.

According to a third aspect of the present disclosure, the object is achieved by a lawnmower comprising a lawnmower body, and one or more cutting assemblies according to the first aspect of the present disclosure, or a pair of cutting assemblies according to the second aspect of the present disclosure, wherein the mounting unit of each cutting assembly is mounted to the lawnmower body of the lawnmower.

Thereby, a lawnmower is provided having conditions for cutting grass to a low cutting height, while obtaining a high uniformity of a length of the grass being cut and a low risk of scalping.

Accordingly, a lawnmower is provided overcoming, or at least alleviating, at least some of the above-mentioned problems and drawbacks. As a result, the above-mentioned object is achieved.

Optionally, the lawnmower comprises three cutting assemblies arranged to the lawnmower body such that two cutting assemblies constitute adjacent front cutting assemblies and one cutting assembly constitute a centrally arranged rear cutting assembly. Thereby, a large cutting width of the lawnmower can be provided while being able to cut grass to a low cutting height, obtain a high uniformity of a length of the grass being cut, and a low risk of scalping.

Optionally, the lawnmower comprises a cutting guard enclosing each cutting assembly. Thereby, safe operation of the cutting assembly can be ensured by preventing external objects from reaching a cutting unit of the cutting assembly while also containing debris and objects thrown by a cutting unit, enhancing safety and protecting surrounding areas during operation.

Optionally, the lawnmower is a robotic lawnmower. Thereby, the lawnmower can operate autonomously within a defined area, reducing the need for user intervention and providing a convenient and efficient solution for maintaining lawns.

It will be appreciated that the various embodiments described for the method are all combinable with the control arrangement as described herein. That is, the control arrangement according to the fourth aspect of the invention may be configured to perform any one of the method steps of the method according to the first aspect of the invention.

Further features of, and advantages with, the present invention will become apparent when studying the appended claims and the following detailed description.

### BRIEF DESCRIPTION OF THE DRAWINGS

Various aspects of the present disclosure, including its particular features and advantages, will be readily understood from the example embodiments discussed in the following detailed description and the accompanying drawings, in which:
Fig. 1 schematically illustrates a perspective view of a lawnmower according to some embodiments,
Fig. 2 illustrates a cutting deck module of the lawnmower illustrated in Fig. 1, as seen towards the underside thereof,
Fig. 3 illustrates a cutting assembly of the lawnmower depicted in Fig. 1, as seen towards an underside thereof,
Fig. 4 illustrates a perspective view of the cutting assembly illustrated in Fig. 3,
Fig. 5 illustrates a front view of the cutting assembly illustrated in Fig. 3 and Fig. 4,
Fig. 6 illustrates the front view of the cutting assembly illustrated in Fig. 5 in which a cutting arrangement has been tilted,
Fig. 7 illustrates a first front view of two cutting assemblies of the lawnmower depicted in Fig. 1 that constitute adjacent front cutting assemblies,
Fig. 8 illustrates a second front view of the two cutting assemblies of the lawnmower depicted in Fig. 1 that constitute the adjacent front cutting assemblies,
Fig. 9 schematically illustrates a cross section of an adjustment mechanism of the cutting assembly illustrated in Fig. 2 - Fig. 8,
Fig. 10 illustrates a perspective view of a cutting assembly according to some further embodiments,
Fig. 11 illustrates a front view of the cutting assembly illustrated in Fig. 10,
Fig. 12 illustrates the front view of the cutting assembly illustrated in Fig. 11 in which the cutting arrangement has been tilted, and
Fig. 13 illustrates a front view of a pair of cutting assemblies according to some further embodiments.

### DETAILED DESCRIPTION

Aspects of the present disclosure will now be described more fully. Like reference signs refer to like elements throughout. Well-known functions or constructions will not necessarily be described in detail for brevity and/or clarity.

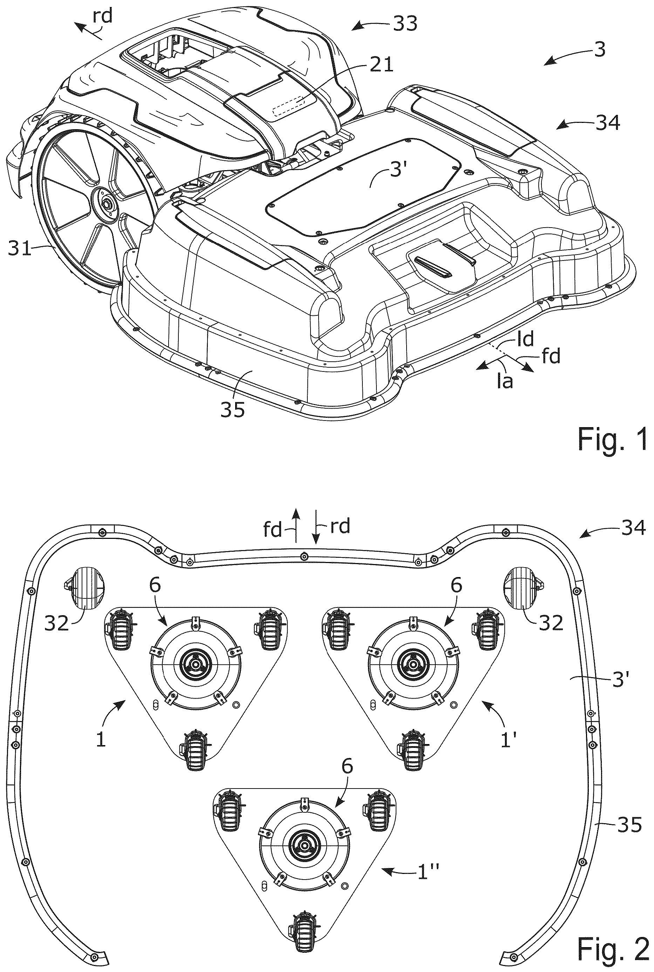

**Fig. 1** schematically illustrates a perspective view of a lawnmower 3 according to some embodiments. According to the illustrated embodiments, the lawnmower 3 is a robotic lawnmower, i.e., a self-propelled robotic lawnmower capable of navigating and operating an area in an autonomous manner, i.e., in a manner not requiring the direct intervention or control of a user.

According to the embodiments herein, the robotic lawnmower 3 is a small or mid-sized robotic lawnmower 3 configured to be used to cut grass in areas used for aesthetic and recreational purposes, such as gardens, parks, city parks, sports fields, lawns around houses, apartments, commercial buildings, offices, and the like. According to further embodiments, the lawnmower 3, as referred to herein, may be another type of lawnmower 3, such as a walk-behind mower or riding mower.

According to the illustrated embodiments, the lawnmower 3 comprises a lawnmower body 3'. The lawnmower body 3' comprises a driving module 33 and a cutting deck module 34.

**Fig. 2** illustrates the cutting deck module 34 as seen towards the underside thereof. The underside of the cutting deck module 34 is arranged to face a ground surface when the lawnmower 3 is positioned in an upright use position on a ground surface, as is depicted in Fig. 1. Below, simultaneous reference is made to Fig. 1 and Fig. 2, if not indicated otherwise.

As seen in Fig. 2, the cutting deck module 34 comprises a pair of support wheels 32. The support wheels 32 are configured to abut against a ground surface when the lawnmower 3 is positioned in the upright use position thereon. According to the illustrated embodiments, the support wheels 32 are non-driven wheels. Moreover, according to the illustrated embodiments, the support wheels 32 are pivotally arranged around a respective pivot axis such that the rolling direction of the respective support wheel 32 can follow a travel direction of the robotic lawnmower 3.

The lawnmower 3 further comprises a pair of drive wheels 31. In Fig. 1, only one drive wheel 31 of the pair of drive wheels 31 is visible. The drive wheels 31 of the lawnmower 3 may each be powered by an electric motor of the lawnmower 3 to provide motive power and/or steering of the lawnmower 3.

In Fig. 1, a longitudinal direction Id of the lawnmower 3 is indicated. The longitudinal direction Id of the lawnmower 3 extends in a lateral/longitudinal plane of the lawnmower 3. The lateral/longitudinal plane is parallel to a flat ground surface when the lawnmower 3 is positioned in the intended use position thereon. Moreover, in Fig. 1, a lateral direction la of the lawnmower 3 is indicated. The lateral direction la is perpendicular to the longitudinal direction Id of the lawnmower 3 and is parallel to a flat ground surface when the lawnmower 3 is positioned in the intended use position thereon.

Moreover, the longitudinal direction Id of the lawnmower 3 is parallel to a forward moving direction fd of the lawnmower 3, as well as a reverse moving direction rd of the lawnmower 3. The reverse moving direction rd is opposite to the forward moving direction fd.

According to the illustrated embodiments, the drive wheels 31 of the lawnmower 3 are non-steered wheels having a fix rolling direction in relation to the lawnmower body 3'. The respective rolling direction of the drive wheels 31 of the lawnmower 3 is substantially parallel to the longitudinal direction Id of the lawnmower 3.

As understood from the above, when the drive wheels 31 of the lawnmower 3 are rotated at the same rotational velocity in a forward rotational direction, and no wheel slip is occurring, the lawnmower 3 will move in the forward moving direction fd indicated in Fig. 1 - Fig. 3. Likewise, when the drive wheels 31 of the lawnmower 3 are rotated at the same rotational velocity in a reverse rotational direction, and no wheel slip is occurring, the lawnmower 3 will move in the reverse moving direction rd.

According to the illustrated embodiments, the lawnmower 3 may be referred to as a four-wheeled rear wheel driven lawnmower 3. According to further embodiments, the lawnmower 3 may be provided with another number of wheels 31, 32, such as three wheels. Moreover, according to further embodiments, the lawnmower 3 may be provided with another configuration of driven and non-driven wheels, such as a front wheel drive or an all-wheel drive. Furthermore, the lawnmower 3 may comprise another type of lawnmower support member than wheels, such as a number of ground followers, a continuous track assembly, or the like.

As schematically indicated in Fig. 1, according to the illustrated embodiments, the lawnmower 3 comprises a control arrangement 21. The control arrangement 21 is configured to navigate the lawnmower 3 over a ground surface. The control arrangement 21 may be configured to control propulsion of the lawnmower 3, and steer the lawnmower 3, by controlling electric motors of the lawnmower 3 arranged to drive the drive wheels 31 of the lawnmower 3. According to further embodiments, the control arrangement 21 may be configured to steer the lawnmower 3 by controlling the angle of steered wheels of the lawnmower 3. According to still further embodiments, the robotic lawnmower may be an articulated robotic lawnmower, wherein the control arrangement 21 may be configured to steer the robotic lawnmower by controlling the angle between frame portions of the articulated robotic lawnmower.

The control arrangement 21 may be configured to control propulsion of the lawnmower 3 and may be configured to steer the lawnmower 3 so as to navigate the lawnmower 3 in an area to be operated. The lawnmower 3 may further comprise one or more sensors arranged to sense a magnetic field of a wire, and/or one or more positioning units, and/or one or more sensors arranged to detect an impending or ongoing collision event with an object.

In addition, the lawnmower 3 may comprise a communication unit connected to the control arrangement 21. The communication unit may be configured to communicate with a remote communication unit to receive instructions therefrom and/or to send information thereto. The communication may be performed wirelessly over a wireless connection such as the internet, or a wireless local area network (WLAN), or a cellular network, or a wireless connection for exchanging data over short distances using short-wavelength, i.e. ultra-high frequency (UHF) radio waves in the industrial, scientific, and medical (ISM) band from 2.4 to 2.486 GHz.

As an alternative, or in addition, the control arrangement 21 may be configured to obtain data from, or may comprise, one or more positioning units utilizing a local reference source, such as a local sender and/or a wire, to estimate or verify a current position of the lawnmower 3. As another example, the lawnmower 3 may comprise one or more of a Radio Detection and Ranging (radar) sensor, a Light Detection and Ranging (lidar) sensor, an image capturing unit, such as a camera, an ultrasound sensor, or the like.

The control arrangement 21 may be configured to control propulsion of the lawnmower 3, and steer the lawnmower 3, so as to navigate the lawnmower 3 in a systematic and/or random pattern to ensure that an area is completely covered, for example using input from one or more of the above described sensors and/or units. Furthermore, the lawnmower 3 may comprise one or more batteries arranged to supply electricity to components of the lawnmower 3. As an example, the one or more batteries may be arranged to supply electricity to electric motors of the lawnmower 3, such as to one or more electric propulsion motors, by an amount controlled by the control arrangement 21.

According to the illustrated embodiments, the lawnmower 3 comprises three cutting assemblies 1, 1', 1" each comprising a cutting unit 6. According to further embodiments, the lawnmower 3 may comprise another number of cutting assemblies 1, 1', 1", such as one or more cutting assembly 1, 1', 1".

According to the illustrated embodiments, the three cutting assemblies 1, 1', 1" are arranged to the lawnmower body 3' such that two cutting assemblies 1, 1' constitute adjacent front cutting assemblies and one cutting assembly 1" constitute a centrally arranged rear cutting assembly. The lawnmower 3 comprises a cutting guard 35 enclosing each cutting assembly 1, 1', 1". According to the embodiments illustrated in Fig. 1 and 2, the cutting guard 35 is part of the cutting deck module 34 of the lawnmower 3.

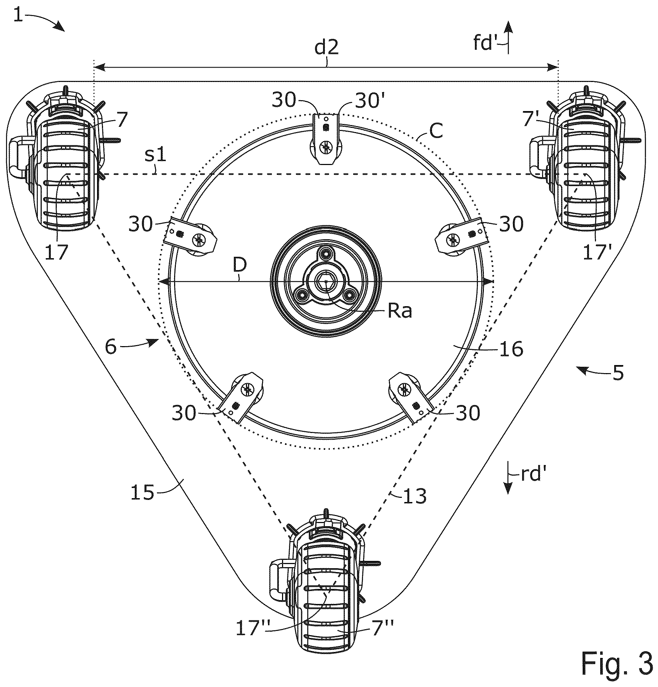

**Fig. 3** illustrates a cutting assembly 1 of the lawnmower 3 depicted in Fig. 1 as seen towards the underside thereof. The underside of the cutting assembly 1 is arranged to face a ground surface when the lawnmower 3 is positioned in an upright use position on a ground surface, as is depicted in Fig. 1. Below, simultaneous reference is made to Fig. 1 - Fig. 3, if not indicated otherwise.

The cutting assemblies 1, 1', 1" illustrated in Fig. 2 have identical design. Therefore, several features, functions, and advantages are only explained in detail herein for one cutting assembly 1 of the three cutting assemblies 1, 1', 1" of the lawnmower 3. However, accordingly, the remaining cutting assemblies 1', 1" of the lawnmower 3 may comprise the same features, functions, and advantages.

The cutting assembly 1 comprises a cutting arrangement 5 comprising a cutting unit 6 and three ground engaging members 7, 7', 7". Each of the three ground engaging members 7, 7', 7" is arranged to abut against a ground surface when the lawnmower 3 is positioned in an upright use position on a ground surface.

According to the illustrated embodiments, the cutting unit 6 comprises a cutting disc 16 and a number of cutting members 30 pivotally arranged at a periphery of the cutting disc 16. According to the embodiments illustrated in Fig. 3, the cutting unit 6 comprises five cutting members 30 each pivotally arranged at the periphery of the cutting disc 16. However, according to further embodiments, the cutting unit 6 may comprise another number of cutting members 30, such as a number between one or eight. Moreover, according to some embodiments, the cutting assembly 1 may comprise another type of cutting unit 6, such as a fixed cutting arm or a similar arrangement.

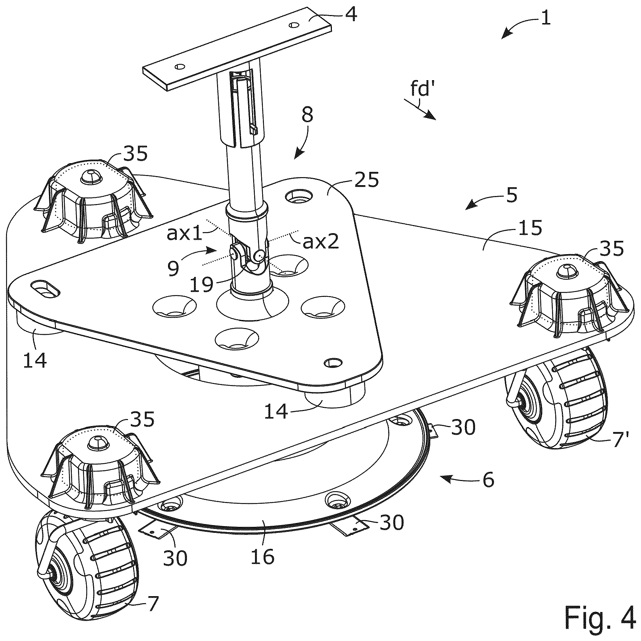

**Fig. 4** illustrates a perspective view of the cutting assembly 1 illustrated in Fig. 3. In Fig. 4, a mounting unit 4 of the cutting assembly 1 is visible. The mounting unit 4 is configured to be mounted to a lawnmower body 3' of the lawnmower 3. In other words, in Fig. 2, the mounting unit 4 of each cutting assembly 1, 1', 1" is mounted to the cutting deck module 34 of the lawnmower body 3' of the lawnmower 3 to cut vegetation during operation of the lawnmower 3. In Fig. 2, each cutting assembly 1, 1', 1" is schematically depicted as mounted to a top surface of the cutting deck module 34. However, the mounting unit 4 of each cutting assembly 1, 1', 1" may be mounted to a frame structure of the cutting deck module 34, or another part of a lawnmower 3, such as a chassis part of a lawnmower 3.

In Fig. 3 and Fig. 4, a forward moving direction fd' of the cutting assembly 1' is indicated. The mounting unit 4 of each cutting assembly 1, 1', 1" is configured to be mounted to the lawnmower body 3' of the lawnmower 3 such that the forward moving direction fd' of the cutting assembly 1' of the cutting assembly 1 coincides with the forward moving direction fd of the lawnmower 3.

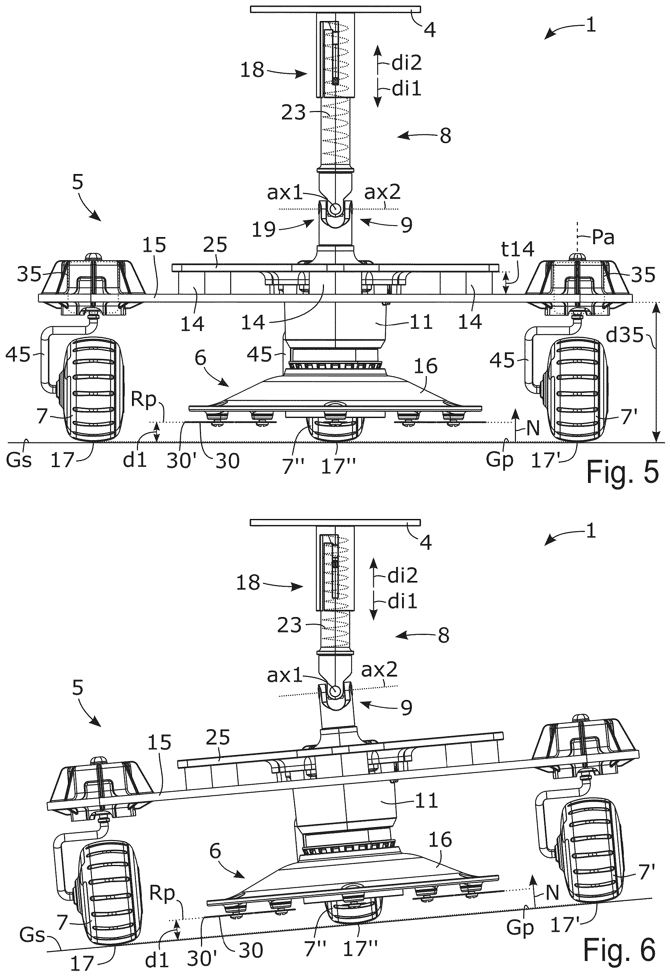

**Fig. 5** illustrates a front view of the cutting assembly 1 illustrated in Fig. 3 and Fig. 4. In Fig. 5, the cutting assembly 1 is illustrated as positioned against a ground surface Gs. Below, simultaneous reference is made to Fig. 1 - Fig. 5, if not indicated otherwise. As can be seen in Fig. 5, each of the three ground engaging members 7, 7', 7" is configured to abut against the ground surface Gs in a ground engaging plane Gp to maintain a distance d1 between the cutting unit 6 and the ground surface Gs during operation of the cutting assembly 1. The ground engaging plane Gp extends between ground engaging portions 17, 17', 17" of the three ground engaging members 7, 7', 7".

In Fig. 5, a motor 11 of the cutting arrangement 5 of the cutting assembly 1 is indicated. The motor 11 is configured to rotate the cutting unit 6 during operation of the cutting assembly 1. In Fig. 3, a rotation axis Ra of the cutting unit 6 is indicated. As understood from the above, the motor 11 is configured to rotate the cutting unit 6 around the rotation axis Ra during operation of the cutting assembly 1. According to the illustrated embodiments, the motor 11 is an electric motor. The motor 11 may be powered using electricity from one or more batteries of the lawnmower 3.

In Fig. 5, a normal N of the ground engaging plane Gp is indicated. The normal N is perpendicular to the ground engaging plane Gp. According to the illustrated embodiments, the rotation axis Ra of the cutting unit 6 is parallel to the normal N of the ground engaging plane Gp.

Moreover, in Fig. 5, a rotation plane Rp of the cutting unit 6 is indicated. The cutting members 30 of the cutting unit 6 rotates in the rotation plane Rp during operation of the cutting assembly 1. Since the rotation axis Ra of the cutting unit 6 is parallel to the normal N of the ground engaging plane Gp according to the illustrated embodiments, the rotation plane Rp of the cutting unit 6 is parallel to the ground engaging plane Gp according to the illustrated embodiments.

However, according to some embodiments, the rotation plane Rp of the cutting unit 6 may be angled relative to the ground engaging plane Gp. For example, the angle between the rotation plane Rp and the ground engaging plane Gp may be less than 10 degrees, less than 6 degrees, or less than 3 degrees. In these embodiments, the cutting unit 6 is preferably provided with a forward-tilted angle, meaning that the distance between the cutting unit 6 and the ground-engaging plane Gp is smaller at a front portion of the cutting unit 6 compared to a rear portion, relative to the forward-moving direction fd' of the cutting assembly 1.

According to embodiments herein, the cutting assembly 1 comprises a connection arrangement 8. The connection arrangement 8 comprises a pivot mechanism 9 pivotally attaching the cutting arrangement 5 to the mounting unit 4 around multiple axes ax1, ax2 each being transversal to the normal N of the ground engaging plane Gp. In other words, the cutting arrangement 5 is connected to the mounting unit 4 via the connection arrangement 8, wherein the pivot mechanism 9 of the connection arrangement 8 allows the cutting arrangement 5 to freely pivot around the multiple axes ax1, ax2.

According to the embodiments illustrated in Fig. 4 and Fig. 5, the pivot mechanism 9 comprises a universal joint 19, i.e., a device having two perpendicular pivot axes ax1, ax2. In these embodiments, the universal joint 19 is arranged such that each of the multiple axes ax1, ax2 thereof is parallel to the ground engaging plane Gp. The cutting arrangement 5 is thus free to pivot around these multiple axes ax1, ax2.

According to the embodiments illustrated in Fig. 4 and Fig. 5, a first pivot axis ax1 of the pivot mechanism 9 is parallel to the forward moving direction fd' of the cutting assembly 1 and a second pivot axis ax2 of the pivot mechanism 9 is perpendicular to the forward moving direction fd' of the cutting assembly 1. However, according to further embodiments, each of the first and second pivot axis ax1, ax2 may be transversal to the forward moving direction fd' of the cutting assembly 1'. This is because, since the pivot mechanism 9 allows the cutting arrangement 5 to pivot around each of the first and second pivot axis ax1, ax2, the cutting arrangement 5 is also allowed to pivot around any imaginary pivot axis lying in a plane parallel to the ground engaging plane Gp.

In other words, the pivot mechanism 9 allows the cutting arrangement 5 to be pivoted in any direction meaning that the cutting arrangement 5 can be pivoted relative to the mounting unit 4 around a pivot axis ax1 parallel to the longitudinal direction Id of lawnmower 3, around a pivot axis ax2 parallel to the lateral direction la of the lawnmower 3, as well as around any pivot axis laying in the same plane as these pivot axes ax1, ax2. Moreover, the universal joint 19 of the pivot mechanism 9 prevents rotation of the cutting arrangement 5 relative to the mounting unit 4 around an axis perpendicular to these pivot axes ax1, ax2. As understood from the above, such an axis is parallel to the normal N of the ground engaging plane Gp in Fig. 5.

**Fig. 6** illustrates the front view of the cutting assembly 1 illustrated in Fig. 5 in which the cutting arrangement 5 has been tilted. That is, in more detail, as compared to the illustration of Fig. 5, the cutting arrangement 5 has been rotated around the first pivot axis ax1 of the pivot mechanism 9 of the connection arrangement 8 due to the inclined ground surface Gs in Fig. 6.

Moreover, as indicated in Fig. 5 and Fig. 6, the connection arrangement 8 comprises a guide mechanism 18 enabling movement of the cutting arrangement 5 in directions di1, di2 towards and away from the mounting unit 4. In these embodiments, the guide mechanism 18 is a linear guide mechanism enabling linear movement of the cutting arrangement 5 in directions di1, di2 towards and away from the mounting unit 4.

Moreover, in these embodiments, the connection arrangement 8 comprises an elastic element 23 arranged to bias the cutting arrangement 5 in a direction di1 away from the mounting unit 4. In Fig. 5 and Fig. 6, the elastic element 23 has been schematically indicated in dotted lines. According to the illustrated embodiments, the elastic element 23 is a coil spring. In Fig. 6, the cutting arrangement 5 has moved in a direction di2 closer to the mounting unit 4 compared to its position in Fig. 5, resulting in compression of the elastic element 23.

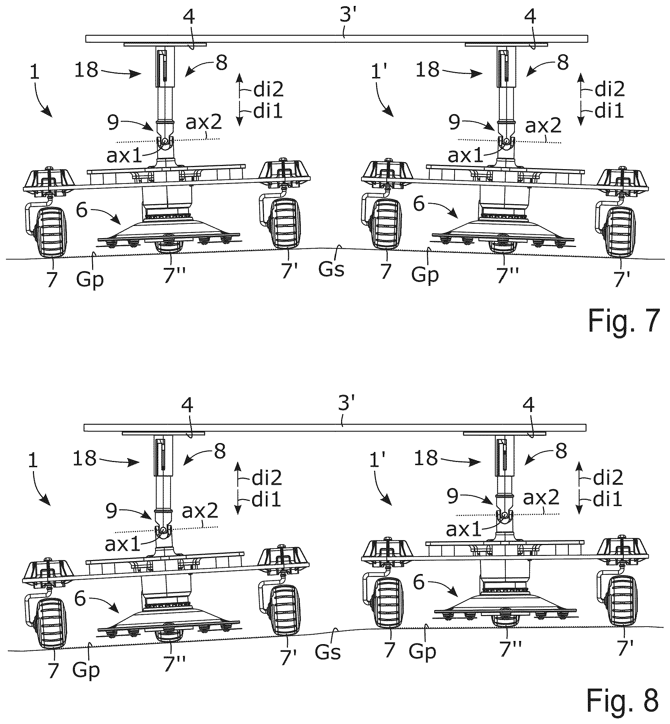

**Fig. 7** illustrates a first front view of the two cutting assemblies 1, 1' of the lawnmower 3 depicted in Fig. 1 that constitute the adjacent front cutting assemblies. In Fig. 7, the cutting assembly that constitute the centrally arranged rear cutting assembly has been omitted for reasons of brevity and clarity. Moreover, the lawnmower body 3' of the lawnmower has been schematically depicted in Fig. 7.

As is evident from above, the pivot mechanism 9 of the cutting assemblies 1, 1' allows the respective cutting arrangement 5, with the cutting unit 6, to follow the contour of a ground surface Gs.

**Fig. 8** illustrates a second front view of the two cutting assemblies 1, 1' of the lawnmower 3 depicted in Fig. 1 that constitute the adjacent front cutting assemblies. In Fig. 8, the contour of the ground surface Gs has caused a linear movement of the cutting arrangement 5 of the cutting assembly 1' to the right in Fig. 7 in the direction di2 towards the mounting unit 4 of the cutting assembly 1'.

Accordingly, due to the combination of the guide mechanism 18 and the pivot mechanism 9 of the respective cutting assembly 1, 1', the respective cutting arrangement 5 with the cutting unit 6 are allowed to follow the contour of a ground surface Gs, to provide a high uniformity of a length of the grass being cut and a low risk of scalping.

The ground engaging portions 17, 17', 17" of the three ground engaging members 7, 7', 7" are indicated in Fig. 3, Fig. 5, and Fig. 6. By comprising three ground engaging members 7, 7', 7", a ground engaging contact between each ground engaging member 7, 7', 7" and a ground surface can be ensured, as three points are sufficient to define a plane.

As is indicated in Fig. 3, according to the illustrated embodiments, the ground engaging members 7, 7', 7" are arranged such that ground engaging portions 17, 17', 17" thereof forms edges of a triangle 13 that inscribes the rotation axis Ra. This means that the rotation axis Ra of the cutting unit 6 extends through the imaginary triangle 13 formed when lines are drawn between the ground engaging portions 17, 17', 17" of the three ground engaging members 7, 7', 7".

According to the illustrated embodiments, the triangle 13 comprises a first side s1 being perpendicular to the forward moving direction fd' of the cutting assembly 1. Moreover, a circular path C is illustrated in Fig. 3 in dotted lines. The cutting unit 6 is configured to rotate during operation of the cutting assembly 1 such that radially outer portions 30' of the cutting unit 6 follow the circular path C. According to the illustrated embodiments, the radially outer portions 30' of the cutting unit 6 is radially outer portions 30' of the cutting members 30. In this context, the term "radially outer portions" means portions of the cutting unit 6 located furthest from the rotation axis Ra of the cutting unit 6.

As mentioned, according to the illustrated embodiments, the cutting arrangement 5 comprises three ground-engaging members 7, 7', 7", including two front members 7, 7' and one rear member 7". In these embodiments, the distance d2 between the two front members 7, 7' is greater than the diameter D of the circular path C. Moreover, the two front members 7, 7' are positioned outside the circular path C when the cutting assembly 1 is viewed in a direction rd' opposite to the forward moving direction fd' of the cutting assembly 1. Thereby, it is ensured that the ground-engaging members 7, 7' are positioned such that they do not press down or flatten the grass before the grass reaches the cutting unit 6 when the cutting assembly 1 is moved along the forward moving direction fd' over the ground surface, which can further enhance the cutting result.

As is evident from Fig. 2 - Fig. 8, according to the illustrated embodiments, the ground-engaging members 7, 7', 7" are wheels. Therefore, in these embodiments, the ground-engaging members 7, 7', 7" may also be referred to as wheels, support wheels, distance maintaining wheels, or the like. Moreover, according to the illustrated embodiments, each ground-engaging members 7, 7', 7" is pivotally arranged around a respective pivot axis such that the rolling direction thereof can follow a travel direction of the robotic lawnmower 3. Pivot arms 45 of the three ground engaging members 7, 7', 7" are indicated in Fig. 5. According to further embodiments, the cutting assembly 1 may comprise another type of ground engaging members 7, 7', 7", such as a number of ground following elements, or the like.

The following is explained with reference to Fig. 4 - Fig. 6. According to the illustrated embodiments, the cutting arrangement 5 of the cutting assembly 1 comprises a first structural member 15 to which the three or more ground-engaging members 7, 7', 7" are attached. The first structural member 15 is also indicated in Fig. 3.

The cutting arrangement 5 further comprises a second structural member 25 attached to the connection arrangement 8. The motor 11 with the cutting unit 6 is attached to the second structural member 25. According to the illustrated embodiments, each of the first and second structural members 15, 25 is formed as a plate-like object, wherein the extension directions of the first and second structural members 15, 25 are substantially parallel to the ground engaging plane Gp. However, according to further embodiments, each of the first and second structural members 15, 25 may be formed in another manner.

As is best seen in Fig. 4, according to the illustrated embodiments, the first structural member 15 comprises a centrally arranged opening. As is best seen in Fig. 5, the motor 11 of the cutting arrangement 5 protrudes through the centrally arranged opening of the first structural member 15.

The cutting arrangement 5 comprises a set of spacers 14 positioned between the first structural member 15 and the second structural member 25. The set of spacers 14 is arranged such that a change in the thickness t14 of the spacers 14 changes the distance d1 between the cutting unit 6 and the ground surface Gs. The thickness t14 of the spacers 14 and the distance d1 between the cutting unit 6 and the ground surface Gs are indicated in Fig. 5.

This is achieved because the thickness t14 of the set of spacers 14 sets the relative distance between the first and second structural members 15, 25 as measured along a direction parallel to the normal N of the ground engaging plane Gp, wherein the three or more ground-engaging members 7, 7', 7" are attached to the first structural member 15 and the motor 11 with the cutting unit 6 is attached to the second structural member 25. In other words, due to this arrangement, a change in thickness t14 of the set of spacers 14 changes the relative distance between ground engaging portions 17, 17', 17" of the three or more ground engaging members 7, 7', 7" and the cutting unit 6, and thus also changes the distance d1 between the cutting unit 6 and the ground engaging plane Gp.

Thus, due to the set of spacers 14, a cutting assembly 1 is provided that allows a user to alter or adjust the cutting height d1 of the cutting assembly 1 simply by replacing the set of spacers 14 with another set of a different thickness t14. In addition, the tolerance chain between the ground-engaging portions 17, 17', 17" of the three or more ground-engaging members 7, 7', 7" and the cutting unit 6 can be compensated for by the set of spacers 14.

As is schematically indicated in Fig. 4 and Fig. 5, according to the illustrated embodiments, each ground engaging member 7, 7', 7" of the cutting assembly 1 is connected to the first structural member 15 of the cutting arrangement 5 via an adjustment mechanism 35. As indicated in Fig. 5, the adjustment mechanism 35 is controllable to adjust a relative distance d35 between a ground engaging portion 17, 17', 17" of the ground engaging member 7, 7', 7" and the first structural member 15. In this manner, the distance d1 between the cutting unit 6 and the ground surface Gs, i.e., the provided cutting height, can be finely tuned.

In addition, since each ground-engaging member 7, 7', 7" is connected to the first structural member 15 of the cutting arrangement 1 via the adjustment mechanism 35, the angle of the cutting unit 6 relative to the ground engaging plane Gp can also be adjusted via the adjustment mechanisms 35. Furthermore, the tolerance chain between the ground-engaging portions 17, 17', 17" and the cutting unit 6 can be compensated for via the adjustment mechanisms 35, further enhancing the precision and effectiveness of the cutting assembly 1.

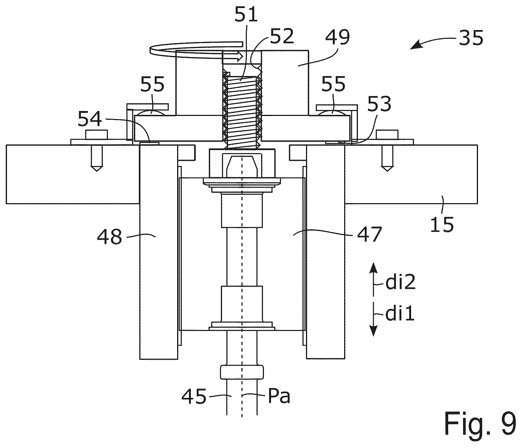

**Fig. 9** schematically illustrates a cross section of the adjustment mechanism 35 of the cutting assembly 1 illustrated in Fig. 2 - Fig. 8. A portion of the first structural member 15 and a pivot arm 45 is also seen in Fig. 9. The pivot arm 45 is pivotally arranged around a pivot axis Pa in a first support housing 47. One pivot axis Pa is also indicated in Fig. 5. Below, simultaneous reference is made to Fig. 5 and Fig. 9, if not indicated otherwise. The pivot axis Pa is substantially parallel to the normal N of the ground engaging plane Gp. In this context, the wording "substantially parallel to" means that the angle between the normal N and the pivot axis Pa is less than 7 degrees.

The adjustment mechanism 35 further comprises a second support housing 48. The second support housing 48 is attached to the first structural member 15 and the first support housing 47 is slidably received in the second support housing 48 in directions di1, di2 towards and away from the ground engaging plane Gp. As is further explained below, according to some embodiments, the support housing 48 is an integral part of the first structural member 15.

The adjustment mechanism 35 comprises an adjustment knob 49 allowing adjustment of the relative positions of first and second support housings 47, 48 so as to alter the relative distance d35 between a ground engaging portion 17, 17', 17" of the ground engaging member 7, 7', 7" and the first structural member 15.

In more detail, according to the embodiments illustrated in Fig. 9, the adjustment mechanism 35 comprises a threaded rod 51 attached to the first support housing 47. The threaded rod 51 comprises external treads engaging internal threads 52 of the adjustment knob 49. The adjustment knob 49 is rotationally arranged relative to the first structural member 15 and the second support housing 48 such that a turning of the adjustment knob 49 in one rotational direction presses the first support housing 47, and thus also the pivot arm 45, in the direction di1 towards the ground engaging plane Gp, and such that a turning of the adjustment knob 49 in the other rotational direction presses the first support housing 47, and thus also the pivot arm 45, in the direction di2 away from the ground engaging plane Gp.

However, according to further embodiments, the adjustment mechanism 35 may be configured in another manner. For example, the adjustment knob 49 may be connected to the first support housing 47 via a splined interface such that a rotation of the adjustment knob 49 translates into rotation of the first support housing 47, wherein the first support housing 47 comprises external threads engaging with internal treads of the second support housing 48. Thus, also in this manner, the first support housing 47 and the pivot arm 45 can be moved in the directions di1, di2 towards and away from the ground engaging plane Gp by turning the adjustment knob 49.

According to the embodiments illustrated in Fig. 9, the adjustment knob 49 is rotationally arranged around a rotation axis coinciding with the pivot axis Pa of the pivot arm 45. However, also this may be configured differently.

Moreover, according to the illustrated embodiments, the adjustment knob 49 comprises a first set of protrusions 53 arranged on a surface that faces the second support housing 48. Moreover, the second support housing 48 comprises a second set of protrusions 54 of the surface facing the adjustment knob 49. The first set of protrusions 53 engages the second set of protrusions 54. Moreover, the adjustment mechanism 35 comprises a set of spring members 55 arranged to bias the adjustment knob 49 in a direction di1 towards the second support housing 48. Due to these features, it is ensured that a certain torque needs to be applied to the adjustment knob 49 in order to rotate the adjustment knob 49. In this manner, unintended turning of the adjustment knob 49, and thus unintended adjustment of the adjustment mechanism 35, can be avoided during operation of the cutting assembly 1.

In the above description of the adjustment mechanism 35, the second support housing 48 is explained as a piece being attached to the first structural member 15 of the cutting assembly 1. However, the second support housing 48 may be an integral part of the first structural member 15. In other words, the second support housing 48 and the first structural member 15 may be formed by one piece of continuous material.

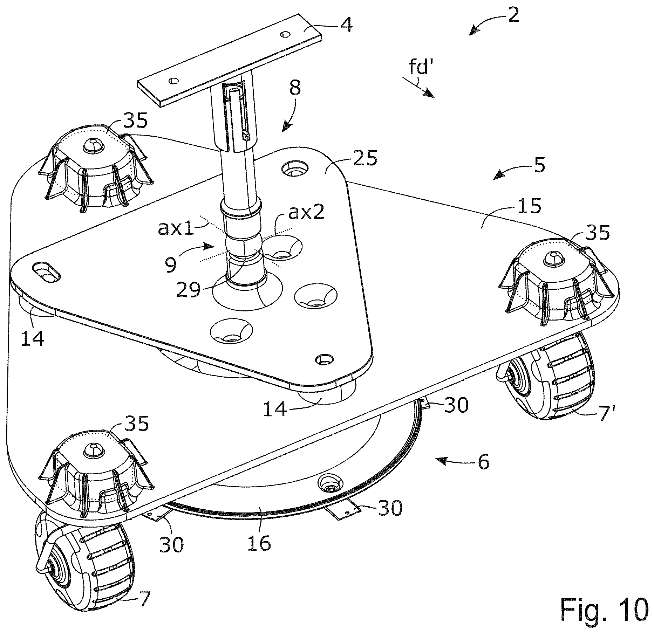

**Fig. 10** illustrates a perspective view of a cutting assembly 2 according to some further embodiments. The lawnmower 3 illustrated in Fig. 1 may comprise a number of cutting assemblies 2 according to the embodiments illustrated in Fig. 10.

The cutting assembly 2 according to the embodiments illustrated in Fig. 10 comprises the same features, functions, and advantages as the cutting assembly 1 explained with reference to Fig. 2 - Fig. 9 above, with one difference. For reasons of brevity and clarity, only this difference is explained in greater detail herein.

According to the embodiments illustrated in Fig. 10, the pivot mechanism 9 of the cutting assembly 2 comprises a ball joint 29 instead of a universal joint.

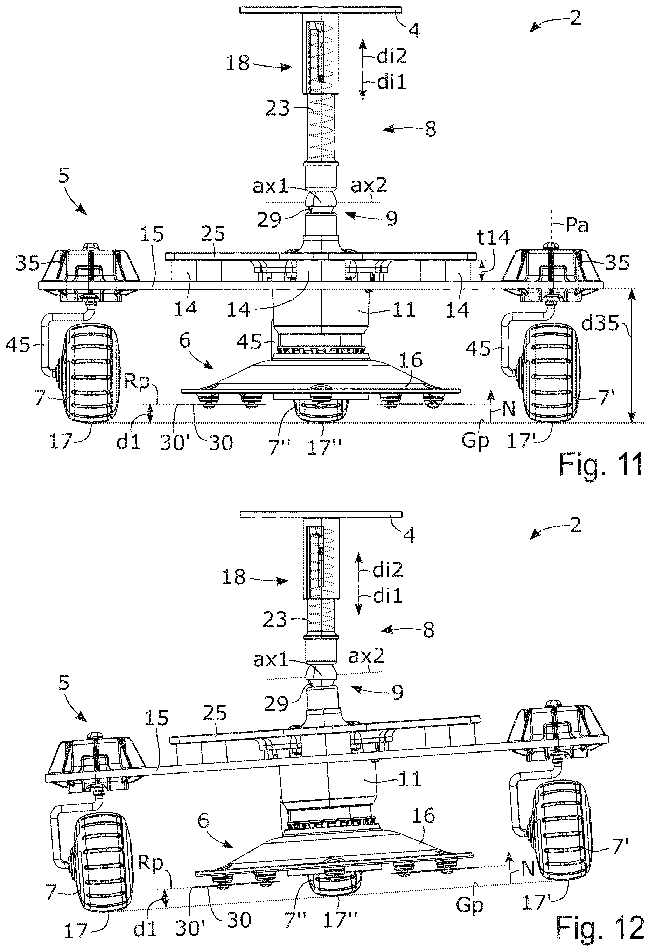

**Fig. 11** illustrates a front view of the cutting assembly 2 illustrated in Fig. 10. Two perpendicular pivot axes ax1, ax2 are illustrated in Fig. 10 and Fig. 11 each being transversal to a normal N of the ground engaging plane Gp. The ball joint 29 of the pivot mechanism 9 allows the cutting arrangement 5 to pivot around these pivot axes ax1, ax2. However, as understood from the above, the ball joint 29 also allows the cutting arrangement 5 to pivot around any imaginary pivot axis lying in a plane parallel to the ground engaging plane Gp.

**Fig. 12** illustrates the front view of the cutting assembly 2 illustrated in Fig. 11 in which the cutting arrangement 5 has been tilted. That is, in more detail, as compared to the illustration of Fig. 11, the cutting arrangement 5 has been rotated around the pivot axis ax1 of the ball joint 19 of the connection arrangement 8.

Moreover, in Fig. 12, the cutting arrangement 5 has moved in a direction di2 closer to the mounting unit 4 compared to its position in Fig. 11, resulting in compression of the elastic element 23 of the guide mechanism 18 of the cutting assembly 2.

Below, simultaneous reference is made to Fig. 1, and Fig. 10 - Fig. 12, if not indicated otherwise. As understood from the above, the ball joint 29 of the pivot mechanism 9 allows the cutting arrangement 5 to be pivoted in any direction meaning that the cutting arrangement 5 can be pivoted relative to the mounting unit 4 around a pivot axis ax1 parallel to the longitudinal direction Id of lawnmower 3, around a pivot axis ax2 parallel to the lateral direction la of the lawnmower 3, as well as around any pivot axis laying in the same plane as these pivot axes ax1, ax2. Moreover, the ball joint 29 of the pivot mechanism 9 prevents rotation of the cutting arrangement 5 relative to the mounting unit 4 around an axis perpendicular to these pivot axes ax1, ax2. Such an axis is parallel to the normal N of the ground engaging plane Gp indicated in Fig. 11.

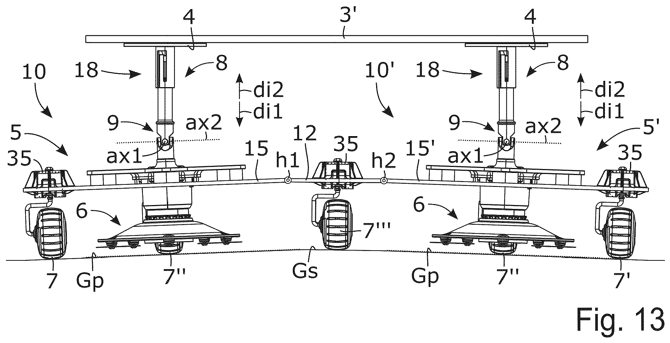

**Fig. 13** illustrates a front view of a pair of cutting assemblies 10, 10' according to some further embodiments. The lawnmower 3 illustrated in Fig. 1 may comprise a number of cutting assemblies 10, 10' according to the embodiments illustrated in Fig. 13.

The cutting assemblies 10, 10' according to the embodiments illustrated in Fig. 13 comprises the same features, functions, and advantages as the cutting assembly 1 explained with reference to Fig. 2 - Fig. 9 above, with only some differences. For reasons of brevity and clarity, only these differences are explained in greater detail herein.

In some places therein, the cutting assemblies 10, 10' illustrated in Fig. 13 are referred to as the cutting assembly 10 and the adjacent cutting assembly 10'. In these embodiments, the cutting assembly 10 comprises one ground engaging member 7‴ shared with the adjacent cutting assembly 10'.

The shared ground engaging member 7‴ is attached to a structural member 12 hingedly connected to the first structural member 15 of the cutting arrangement 5 of the cutting assembly 10 via a first hinge h1. Moreover, the structural member 12 is hingedly connected to the first structural member 15' of the cutting arrangement 5' of the adjacent cutting assembly 10' via a second hinge h2.

Each of the first and second hinges h1, h2 allows pivoting movement around a pivot axis parallel to the pivot axis ax1 indicated in Fig. 13, i.e., around a pivot axis parallel to the longitudinal direction Id of the lawnmower 3. Moreover, according to the illustrated embodiments, each of the first and second hinges h1, h2 is associated with a certain play allowing pivoting movement around a pivot axis parallel to the pivot axis ax2 indicated in Fig. 13, i.e., around a pivot axis ax2 parallel to the lateral direction la of the lawnmower 3. In this manner, the cutting arrangements 5, 5' can individually follow the contour of a ground surface Gs even though they share one ground engaging member 7‴.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A cutting assembly (1, 1', 1", 2, 10) configured to be mounted to a lawnmower (3) to cut vegetation, the cutting assembly (1, 1', 1", 2, 10) comprising:
- a mounting unit (4) configured to be mounted to a lawnmower body (3') of the lawnmower (3),
- a cutting arrangement (5) comprising a cutting unit (6) and three or more ground engaging members (7, 7', 7", 7‴) each configured to abut against a ground surface (Gs) in a ground engaging plane (Gp) to maintain a distance (d1) between the cutting unit (6) and the ground surface (Gs) during operation of the cutting assembly (1, 1', 1", 2, 10), and
- a connection arrangement (8),
wherein the connection arrangement (8) comprises a pivot mechanism (9) pivotally attaching the cutting arrangement (5) to the mounting unit (4) around multiple axes (ax1, ax2) each being transversal to a normal (N) of the ground engaging plane (Gp).

2. The cutting assembly (1, 1', 1", 2, 10) according to claim 1, wherein the each of the multiple axes (ax1, ax2) is parallel to the ground engaging plane (Gp).

3. The cutting assembly (1, 1', 1", 2, 10) according to claim 1 or 2, wherein the cutting unit (6) is configured to rotate in a rotation plane (Rp) during operation of the cutting assembly (1, 1', 1", 2, 10), and wherein the angle between the rotation plane (Rp) and the ground engaging plane (Gp) is less than 10 degrees.

4. The cutting assembly (1, 1', 1", 2, 10) according to claim 3, wherein the cutting arrangement (5) comprises a motor (11) configured to rotate the cutting unit (6) during operation of the cutting assembly (1, 1', 1", 2, 10).

5. The cutting assembly (1, 1', 1", 2, 10) according to any one of the preceding claims, wherein the connection arrangement (8) comprises a guide mechanism (18) enabling movement of the cutting arrangement (5) in directions (di1, di2) towards and away from the mounting unit (4).

6. The cutting assembly (1, 1', 1", 2, 10) according to any one of the preceding claims, wherein the cutting unit (6) is configured to rotate around a rotation axis (Ra) during operation of the cutting assembly (1, 1', 1", 2, 10), and wherein the cutting arrangement (5) comprises three ground engaging members (7, 7', 7", 7‴) arranged such that ground engaging portions (17, 17', 17", 17‴) thereof forms edges of a triangle (13) inscribing the rotation axis (Ra).

7. The cutting assembly (1, 1', 1", 2, 10) according to any one of the preceding claims, wherein the cutting unit (6) is configured to rotate during operation of the cutting assembly (1, 1', 1", 2, 10) such that radially outer portions (30') of the cutting unit (6) follow a circular path (C), and wherein the cutting arrangement (5) comprises three ground-engaging members (7, 7', 7", 7‴), including two front members (7, 7') and one rear member (7"), and wherein the distance (d2) between the two front members (7, 7') is greater than the diameter (D) of the circular path (C).

8. The cutting assembly (1, 1', 1", 10) according to any one of the preceding claims, wherein the pivot mechanism (9) comprises a universal joint (19).

9. The cutting assembly (2) according to any one of the preceding claims, wherein the pivot mechanism (9) comprises a ball joint (29).

10. The cutting assembly (10) according to any one of the preceding claims, wherein the cutting assembly (10) comprises one ground engaging member (7‴) shared with an adjacent cutting assembly (10').

11. The cutting assembly (10) according to claim 10, wherein the shared ground engaging member (7‴) is attached to a structural member (12) hingedly connected to the cutting arrangement (5) of the cutting assembly (10) via a first hinge (h1).

12. A pair of cutting assemblies (10, 10') comprising a cutting assembly (10) according to claim 10 or 11 and the adjacent cutting assembly (10').

13. A lawnmower (3) comprising:
- a lawnmower body (3'), and
- one or more cutting assemblies (1, 1', 1", 2, 10) according to any one of the claims 1 - 11, or a pair of cutting assemblies (10, 10') according to claim 12,
wherein the mounting unit (4) of each cutting assembly (1, 1', 1", 2, 10, 10') is mounted to the lawnmower body (3') of the lawnmower (3).

14. The lawnmower (3) according to claim 13, wherein the lawnmower (3) comprises three cutting assemblies (1, 1', 1", 10, 10') arranged to the lawnmower body (3') such that two cutting assemblies (1, 1', 10, 10') constitute adjacent front cutting assemblies and one cutting assembly (1") constitute a centrally arranged rear cutting assembly.

15. The lawnmower (3) according to claim 13 or 14, wherein the lawnmower (3) is a robotic lawnmower.
